## Europäisches Patentamt

## European Patent Office

## Office européen des brevets

(19)

(11) Veröffentlichungsnummer: **0 031 513**
B1

(12) EUROPÄISCHE PATENTSCHRIFT

(45) Veröffentlichungstag der Patentschrift:
20.06.84

(51) Int. Cl.³: **C 08 J 9/14,** C 08 J 9/00,
C 08 L 61/24

(21) Anmeldenummer: **80107744.7**

(22) Anmeldetag: **09.12.80**

(54) **Elastischer Schaumstoff auf Basis eines Harnstoff/Formaldehyd-Kondensationsproduktes und seine Herstellung.**

(30) Priorität: **14.12.79 DE 2950289**

(43) Veröffentlichungstag der Anmeldung:
**08.07.81 Patentblatt 81/27**

(45) Bekanntmachung des Hinweises auf die Patenterteilung:
**20.06.84 Patentblatt 84/25**

(84) Benannte Vertragsstaaten:
**AT BE DE FR GB IT NL**

(56) Entgegenhaltungen:
**EP - A - 0 017 671**
**EP - A - 0 017 672**
**DE - B - 1 297 331**
**DE - C - 800 704**
**FR - A - 1 567 329**
**US - A - 2 789 095**
**US - A - 3 063 953**

(73) Patentinhaber: **BASF Aktiengesellschaft,
Carl-Bosch-Strasse 38, D-6700 Ludwigshafen (DE)**

(72) Erfinder: **Woerner, Frank Peter, Dr., Am Altenbach 18,
D-6706 Wachenheim (DE)**
Erfinder: **Mahnke, Harald, Dr., Osloer Weg 48,
D-6700 Ludwigshafen (DE)**
Erfinder: **Weber, Heinz, Dr., Am Wehrhaus 26,
D-6718 Gruenstadt (DE)**

## Beschreibung

Die Erfindung betrifft einen Schaumstoff auf Basis eines Harnstoff/Formaldehyd-Kondensationsproduktes, welcher eine niedrige Dichte und eine geringe Wärmeleitzahl aufweist und eine hohe Elastizität und Stabilität hat.

Schaumstoffe werden für verschiedenartige Zwecke, insbesondere im Bauwesen zur Wärme- und Schalldämmung eingesetzt. Die gebräuchlichsten Schaumstoffe sind solche auf Basis von thermoplastischen Kunststoffen, vor allem von Styrolpolymerisaten. Diese haben eine hervorragende Dämmwirkung und weisen gute mechanische Eigenschaften auf, aufgrund des thermoplastischen Charakters von Polystyrol zeigen sie jedoch eine geringe Wärmeformbeständigkeit, die unter 100°C liegt. Polyurethan-Hartschäume haben zwar gute mechanische und Dämm-Eigenschaften, sind jedoch verhältnismässig teuer.

Schaumstoffe auf Basis von Harnstoff/Formaldehyd-Kondensationsprodukten sind zwar schon verschiedentlich in der Patentliteratur beschrieben worden, sie wurden jedoch bisher im Bauwesen zur Wärme- und Schalldämmung noch nicht in technischem Massstab eingesetzt. Sie werden hergestellt durch Einrühren von Luft in eine wässrige Harnstoffharzlösung, welche einen Emulgator und ein Härtungsmittel enthält. Solche Schaumstoffe, wie sie z.B. in der DE-PS 878 557 beschrieben werden, haben den schwerwiegenden Nachteil, dass sie sehr hart und spröde sind und bei der Handhabung leicht brechen bzw. bröseln. Nach der US-PS 2 789 095 und der DE-AS 12 97 331 werden Harnstoffharz-Schäume hergestellt durch Erhitzen einer wässrigen Lösung, die ein Harnstoff/Formaldehyd-Kondensat, ein Treibmittel und einen Härter enthält. Man erhält jedoch auch bei diesen Verfahren spröde Schaumstoffe. In der US-PS 2 807 595 sind geschlossenzellige Harnstoffharz-Schäume beschrieben, die durch Zusatz von Polyäthylenglykol eine verbesserte Elastizität und Rissfestigkeit erhalten sollen. Es zeigt sich aber, dass die Elastizität und vor allem die Wiedererholung beim Stauchen solcher Schaumstoffe für viele Anwendungszwecke nicht ausreicht. In der US-PS 3 063 953 ist ein Verfahren zur Verbesserung der mechanischen Festigkeit, Elastizität und Weichheit von Aminoplastharz-Schäumen beschrieben. Mit diesem Verfahren kann man bei Harnstoffharz-Schäumen, die nach dem Stand der Technik hergestellt wurden, die genannten Eigenschaften zwar etwas, jedoch nicht entscheidend verbessern. Vor allem die Zugfestigkeit solcher Schaumstoffe ist viel zu gering.

In der DE-OS 24 02 441 ist ein Verfahren zur Herstellung von Harnstoff/Formaldehyd-Schaumstoffen beschrieben, bei dem einem alkalisch eingestellten, treibmittelhaltigen Harnstoff/Formaldehyd-Vorkondensat eine starke Säure als Härter zugesetzt wird. Durch die bei der Neutralisation freiwerdende Wärme wird das Treibmittel zum Sieden gebracht und damit das Schäumen bewirkt. Da bei dieser Arbeitsweise der Härtungsvorgang und der Schäumvorgang nebeneinander ablaufen, entstehen verhältnismässig spröde Schaumstoffe. In der EP-OS 2 585 ist ein Verfahren zur Herstellung eines Harnstoff/Formaldehyd-Schaumstoffes mit verminderter Sprödigkeit beschrieben, bei dem ein Vorkondensat mit einem Wassergehalt von weniger als 20% mit einem Treibmittel, einem Emulgator und einem Härter vermischt und dann verschäumt wird. Als Treibmittel wird n-Heptan (Siedepunkt 98°C) eingesetzt, das mit Wasser eine azeotrope Mischung mit einem Siedepunkt von 80°C bildet. Bei dieser Temperatur laufen dann wieder nebeneinander der Schäumvorgang und der Härtungsvorgang ab, so dass die entstehenden Schaumstoffe immer noch verhältnismässig spröde sind.

Der Erfindung lag die Aufgabe zugrunde, Schaumstoffe auf Basis von Harnstoff/Formaldehyd-Kondensationsprodukten bereitzustellen, die bei der Anwendung als Dämmstoffe den Anforderungen genügen, die in der Bauindustrie an solche Materialien gestellt werden. Insbesondere sollen sie gute mechanische Eigenschaften aufweisen, d.h., elastisch, stabil und leicht handhabbar sein.

Gegenstand der Erfindung sind demzufolge elastische, offenzellige Schaumstoffe auf Basis eines Harnstoff / Formaldehyd - Kondensationsproduktes, welches mehr als 50 Gew.%, vorzugsweise mindestens 70 Gew.% Harnstoff und Formaldehyd-Einheiten einkondensiert enthält und weniger als 50, vorzugsweise bis zu 30 Gew.% andere amino-, amid-, hydroxyl- oder carboxylgruppenhaltige Duroplastbildner einerseits und Aldehyde andererseits einkondensiert enthalten kann. Sie sind durch folgende Eigenschaften gekennzeichnet:

a) die Rohdichte nach DIN 53 420 liegt zwischen 4 und 80, vorzugsweise zwischen 6 und 60 und insbesondere zwischen 8 und 40 [g.1-1];

b) die Wärmeleitzahl nach DIN 52 612 ist kleiner als 0,06, vorzugsweise kleiner als 0,05 und insbesondere kleiner als 0,04 [W.m-1.°K-1];

c) die Stauchhärte nach DIN 53 577 bei 60% Stauchung, dividiert durch die Rohdichte liegt unter 0,3, vorzugsweise unter 0,2 [N.cm-2/g.1-1], wobei bei der Bestimmung der Stauchhärte bei 60% Stauchung eine Wiedererholung des Schaumstoffs auf mindestens 70% und vorzugsweise mindestens 80% seiner ursprünglichen Abmessung erfolgen muss;

d) der Elastizitätsmodul in Anlehnung an DIN 53 423, dividiert durch die Rohdichte liegt unter 0,25, vorzugsweise unter 0,2 und insbesondere unter 0,15 [N.mm-2/g.1-1];

e) der Biegeweg beim Bruch nach DIN 53 423 ist grösser als 6, vorzugsweise grösser als 9 und insbesondere grösser als 12 [mm].

Durch die Erfindung werden erstmals technisch brauchbare Schaumstoffe auf Basis von Harnstoff/Formaldehyd-Kondensationsprodukten für den Einsatz im Bauwesen bereitgestellt. Sie haben nicht nur hervorragende Wärmedämmeigenschaften aufgrund ihrer niedrigen Dichte und ihrer geringen Wärmeleitzahl; wegen ihrer Offenzelligkeit eignen sie sich auch gut zur Schalldämmung. Da die Ausgangsstoffe für die Herstellung von Harnstoffharzen $CO_2$, $NH_3$ und $CH_3OH$ sind, hat man hier einen extrem billigen Schaumstoff, der unabhängig ist von Rohstoffen auf Erdöl-Basis.

Bei einer mikroskopischen Betrachtung der erfindungsgemässen Schaumstoffe zeigt es sich, dass das Schaumgerüst eine Vielzahl miteinander verbundener, dreidimensional verzweigter Stege enthält (siehe Abbildung). Harnstoffharzschäume sind nur dann ausreichend elastisch, wenn die Stege folgende Bedingungen erfüllen:

1. Das mittlere Länge:Dicke-Verhältnis muss grösser als 10:1, vorzugsweise grösser als 12:1 und insbesondere grösser als 15:1 sein.

2. Die Dichte der Stege muss grösser als 1,00, vorzugsweise grösser als 1,20 und insbesondere grösser als 1,30 g/cm³ sein.

Zu kurze Stege (mit zu geringen l:d-Verhältnis) erhält man, wenn der Härtungsvorgang zu früh einsetzt, bevor der Schäumvorgang im wesentlichen beendet ist. Eine zu niedrige Stegdichte deutet darauf hin, dass sich im Innern der Stege kleine Hohlräume, Blasen, befinden, die von einer Sekundärschäumung, herrühren. Eine solche Sekundärschäumung tritt ein, wenn der Wassergehalt des Harnstoffharz-Vorkondensats zu hoch war. In beiden Fällen werden spröde Schaumstoffe erhalten.

Das mittlere l:d-Verhältnis wird mikroskopisch bestimmt, wobei die Steglänge und -dicke nach einem statistischen Auszählverfahren ermittelt werden. Als Steglänge ist der Abstand zwischen den Mittelpunkten zweier Knotenstellen und als Stegdicke die Dicke an der schmälsten Stelle eines Stegs, jeweils gemessen an der mikroskopischen Aufnahme definiert. Zur Bestimmung der Dichte der Schaumstoffstege wird der Schaumstoff in eine geeignete Flüssigkeit, z.B. Isopropanol, gehängt, mit der er sich aufgrund seiner Offenzelligkeit vollsaugt, wobei die Luft verdrängt wird. Die Dichte der Stege wird dann nach dem archimedischen Prinzip bestimmt.

Bei den erfindungsgemässen Schaumstoffen handelt es sich um Harnstoff/Formaldehyd-Kondensationsprodukte, die neben Harnstoff weniger als 50, vorzugsweise bis zu 30 Gew.% anderer Duroplastbildner, und neben Formaldehyd weniger als 50, vorzugsweise bis zu 30 Gew.% anderer Aldehyde einkondensiert enthalten können. Besonders bevorzugt ist ein unmodifiziertes Harnstoff/Formaldehyd-Kondensationsprodukt. Als Duroplastbildner kommen beispielsweise in Frage: Melamin, Urethane, Carbonsäureamide, Dicyandiamid, Guanidin, Sulfurylamid, Sulfonsäureamide, aliphatische Amine, Phenol und dessen Derivaten. Bei einem bevorzugten Cokondensat sind 10 bis 30 Gew.% des Harnstoffs durch Melamin ersetzt. Man erhält so einen nach DIN 4102 normalentflammbaren Schaumstoff. Als Aldehyde können z.B. Acetaldehyd, n-Butyraldehyd, Isobutyraldehyd, Trimethylolacetaldehyd, Acrolein, Benzaldehyd, Furfurol, Glyoxal, Phthalaldehyd und Terephthalaldehyd eingesetzt werden. Weitere Einzelheiten über Harnstoff/Formaldehyd-Kondensationsprodukte finden sich in Houben-Weyl, Methoden der organischen Chemie, Band 14/2, 1963, Seiten 319 bis 357. Das Molverhältnis Duroplastbildner:Aldehyd kann in weiten Grenzen zwischen 1:1,1 und 1:3,5 schwanken; im Falle von Harnstoff/Formaldehyd-Kondensaten liegt es vorzugsweise zwischen 1:1,4 und 1:2,4.

Die erfindungsgemässen Schaumstoffe können bis zu 50, vorzugsweise bis zu 20 Gew.% üblicher Zusatzstoffe enthalten. In Frage kommen beispielsweise faser- oder pulverförmige anorganische Verstärkungsmittel oder Füllstoffe, wie Glasfasern, Metallpulver, Metalloxide, Metallsalze oder Silikate, z.B. Talkum, Kaolin, Quarz, Schwerspat oder Kreide; ferner Pigmente und Farbstoffe; Flammschutzmittel, Wie halogen- oder phosphorhaltige organische Verbindungen; Weichmacher, wie Triole, z.B. Trimethylolpropan, oder Acrylate; Hydrophobierungsmittel, wie z.B. Alkylphenole mit 5 bis 15 C-Atomen im Alkylrest, Silikone oder Paraffine; Mittel zur Herabsetzung der Brandgastoxizität oder zur Förderung der Verkohlung, wie z.B. Saccharose, sowie Verbindungen des dreiwertigen Bors, von Fe(III) oder Cu(II). Es ist aber auf jeden Fall bevorzugt, ohne derartige Zusatzstoffe auszukommen. Da Harnstoffharze gewöhnlich leicht entflammbar sind, kann es für bestimmte Anwendungsfälle notwendig werden. Flammschutzmittel zuzusetzen, wobei z.B. Melaminharze in Frage kommen. Da die Schaumstoffe offenporig sind und deshalb Wasser aufnehmen können, kann es für manche Anwendungszwecke notwendig sein, Hydrophobierungsmittel in Mengen von 0,2 bis 5 Gew.% zuzusetzen.

Die erfindungsgemässen Schaumstoffe zeichnen sich durch ihre extrem niedrige Rohdichte aus, die auf bis zu 4 [g.l⁻¹] heruntergehen kann. Dies hat zur Folge, dass die Schaumstoffe von den Einsatzstoff-Kosten her sehr billig sind. Höhere Dichten bis zu 80 [g.l⁻¹] sind nur für besondere Anwendungszwecke, z.B. bei Verbundmaterialien interessant. Vorzugsweise liegt die Rohdichte zwischen 6 und 60, insbesondere zwischen 8 und 40 [g.l⁻¹]. Die Wärmeleitzahl bei 10°C ist kleiner als 0,06, vorzugsweise kleiner als 0,05 und insbesondere kleiner als 0,04 [W.m⁻¹.°K⁻¹]. Sie ist damit günstiger als bei Polyurethan-Weichschäumen und liegt in der Grössenordnung von Polystyrol-Schaumstoffen.

Die günstigen mechanischen Eigenschaften werden durch die Stauchhärte, den Elastizitätsmodul und den Biegeweg beim Bruch ausgedrückt. Der Elastizitätsmodul wird in Anlehnung an DIN 53 423 bestimmt, wobei die Prüfgeschwindigkeit 5 [mm.Min⁻¹] beträgt und die Messung bis zu einer maximalen Durchbiegung von 0,5 mm durchgeführt wird. Dabei ändern sich die Stauchhärte und der Elastizitätsmodul in etwa proportional zur Dichte, so dass zur Charakterisierung der Quotient Stauchhärte durch Rohdichte bzw. Elastizitätsmodul durch Rohdichte herangezogen wird. Ein anwendungstechnisch sehr wichtiges Merkmal der erfindungsgemässen Schaumstoffe ist die Wiedererholung bei der Stauchung. Sie wird bei der Bestimmung der Stauchhärte gemessen und beträgt bei 60% Stauchung mindestens 70% und vorzugsweise mindestens 80%. Es fällt dabei auf, dass bei frisch hergestelltem Schaumstoff die erste Stauchung sich deutlich von den nachfolgenden abhebt: Hier ist eine etwas grössere Kraft zum Stauchen erforderlich, was offenbar darauf zurückzuführen ist, dass Reste von harten Bereichen im Zellgerüst zerstört werden. Durch Walken der Schaumstoffe werden die harten Bereiche zerstört.

Die erfindungsgemässen Schaumstoffe sind weitgehend offenzellig. Offenzellig ist ein Schaumstoff dann, wenn er sich zu mindestens 95% mit einer Flüssigkeit, z.B. Wasser, vollsaugt, wenn man ihn in diese Flüssigkeit eintaucht.

Die erfindungsgemässen Schaumstoffe können hergestellt werden durch Verschäumen einer wässrigen Lösung oder Dispersion, welche ein Harnstoff/Formaldehyd-Vorkondensat, einen Emulgator, ein Treibmittel und einen Härter, sowie gegebenenfalls übliche Zusatzstoffe enthält, und anschliessendes Aushärten des Schaumes. Es hat sich gezeigt, dass besonders elastische Schaumstoffe dann erhalten werden, wenn man verhältnismässig hochkonzentrierte, vorzugsweise 60 bis 80 und insbesondere zwischen 64 und 78 gewichtsprozentige Lösungen oder Dispersionen mit einer Viskosität zwischen 50 und 1000 dPas einsetzt (wobei sich die Konzentrationen auf die Mischung Harz und Gesamtwasser ohne Zusatzstoffe beziehen), und wenn man unter solchen Bedingungen verschäumt, dass zunächst durch Kettenwachstum nur ein geringer Viskositätsanstieg erfolgt und der Härtungsvorgang, d.h. die Vernetzung unter starker Viskositätserhöhung erst dann einsetzt, wenn der Schäumvorgang weitgehend beendet ist. Das Aushärten findet bei der Siedetemperatur des Wassers statt, welches im allgemeinen im Schaum noch vorhanden ist und verdampft.

Die wässrige Lösung bzw. Dispersion des Harnstoffharzes enthält einen Emulgator, vorzugsweise in einer Menge von 0,2 bis 5 Gew.% und insbesondere von 0,5 bis 3,0 Gew.%, bezogen auf das Harz. Der Emulgator soll bewirken, dass das organische Treibmittel in der wässrigen Lösung bzw. Dispersion homogen verteilt wird; er sorgt also für die Stabilität des Systems und verhindert eine Entmischung während des Schäumvorgangs, was einen inhomogenen Schaum zur Folge hätte. Je höher die Schäumtemperatur ist, desto wirksamer muss der Emulgator sein und in desto höherer Konzentration sollte er vorliegen. Der Emulgator wirkt ausserdem als Keimbildner beim Schäumprozess. In Frage kommen anionenaktive Verbindungen, wie insbesondere Metallsalze, vorzugsweise Natriumsalze von Alkylsulfonaten und Alkylarylsulfonaten mit 8 bis 20 C-Atomen im Alkylrest; daneben sind auch Metallsalze von Sulfobernsteinsäureestern, sulfierten Ricinusölen, Alkylnaphthalinsulfonsäuren, Phenolsulfonsäuren, Schwefelsäureestern, z.B. von $C_{12}$-bis $C_{18}$-Alkylhydrogensulfaten und $C_{16}$-bis $C_{18}$-Fettalkoholhydrogensulfaten geeignet; ferner kationenaktive Verbindungen, wie Ölsäuretriäthanolaminester oder Laurylpyridiniumchlorid; sowie nicht ionogene Verbindungen wie äthoxyliertes Ricinusöl, äthoxylierte Talgfettalkohole, äthoxylierte Stearinsäure oder Ölsäure, sowie äthoxyliertes Nonylphenol.

Die wässrige Lösung bzw. Dispersion enthält ferner ein flüchtiges Treibmittel mit einem Siedepunkt zwischen 15 und 75, vorzugsweise zwischen 30 und 75°C. In Frage kommen z.B. Kohlenwasserstoffe, halogenierte Kohlenwasserstoffe, Alkohole, Ketone, Äther und Ester. Bevorzugte Treibmittel sind Pentan (S.P. 36°C), Hexan (S.P. 68°C), Trichlorfluormethan (S.P. 23°C) und Trichlortriflüoräthan (S.P. 46°C). Die Treibmittelmenge richtet sich nach der gewünschten Dichte des Schaumstoffs, sie kann zwischen 1 und 50 Gew.%, vorzugsweise zwischen 5 und 40 Gew.%, bezogen auf das Harz, liegen.

Als Härter werden Verbindungen eingesetzt, welche bei Reaktionsbedingungen Protonen abspalten oder bilden, die dann die Weiterkondensation des Harnstoffharzes katalysieren. Die Mengen liegen zwischen 0,01 und 20, vorzugsweise zwischen 0,05 und 5 Gew.%, bezogen auf das Harz. In Frage kommen anorganische und organische Säuren, z.B. Ameisensäure, Essigsäure, Maleinsäure, Oxalsäure, Milchsäure, Amidosulfonsäure oder Aminosäuren; bevorzugt sind latente Härter, wie Halogencarbonsäuresalze, Chloressigsäureamid, Hydrogenphosphate, Säureanhydride und insbesondere Ammoniumsalze, wie Ammoniumdihydrogenphosphat und Ammonchlorid. Bei Verwendung von Cokondensaten mit Melamin müssen höhere Härterkonzentrationen angewandt werden als bei reinen Harnstoffharzen.

Der pH-Wert der wässrigen Lösung oder Dispersion soll mehr als 3 und vorzugsweise höchstens 6 betragen, und insbesondere zwischen 3,2 und 5,5 liegen.

Die Zusatzstoffe werden mit der wässrigen Lösung oder Dispersion des Melaminharzes homogen vermischt, wobei das Treibmittel ggf. auch unter Druck eingepresst werden kann. Man kann jedoch auch von einem festen, z.B. sprühgetrockneten Harnstoffharz ausgehen und dieses dann mit dem Treibmittel und einer wässrigen Lösung des Emulgators und des Härters vermischen. Die Mischung wird dann auf die Siedetemperatur des Treibmittels in der Lösung bzw. Dispersion beim jeweils herrschenden Druck gebracht. Dies kann durch Erhitzen, z.B. mit Heissluft, Wasserdampf oder dielektrischer Strahlung oder auch durch Ausnutzen von Reaktionswärme geschehen. Dabei geht das Treibmittel in den gasförmigen Zustand über und kann das Schäumen bewirken. Während des isotherm ablaufenden Schäumvorgangs nimmt die wässrige Lösung bzw. Dispersion die Siedetemperatur des Treibmittels beim jeweils herrschenden Druck an. Bevorzugt wird unter Normaldruck bei einer Massetemperatur von 20 bis 80°C gearbeitet, wobei die Umgebungstemperatur weit höher liegen kann.

Ein elastischer, stabiler Schaum mit niedriger Dichte wird dann erhalten, wenn man beim Schäumen und Aushärten bestimmte Bedingungen einhält. Wählt man die Ausgangskonzentration oder die Viskosität des Harnstoffharzes zu niedrig, so erhält man — wie bei den Verfahren nach dem Stand der Technik - spröde Schaumstoffe. Setzt man von vornherein zu hoch viskose Lösungen oder Dispersionen ein, oder setzt ein starker Viskositätsanstieg bereits vor dem Einsetzen des Schäumvorgangs ein, dann reicht der Blähdruck nicht mehr für ein einwandfreies Schäumen aus, und es werden Schaumstoffe mit zu hoher Dichte und nicht ausreichender Elastizität erhalten. Diese Bedingungen können vor allem dadurch eingehalten werden, dass man bei vorgegebenem Treibmittel die Art und Menge des Härters richtig wählt. Dazu genügen meist einige wenige Vorversuche. Ferner ist es wichtig, den Temperaturverlauf so zu steuern, dass bei niedriger Temperatur erst der Schäumvorgang abläuft und dann bei erhöhter Temperatur die Härtung einsetzt. Während des Schäumens erfolgt schon ein geringer Viskositätsanstieg. Dieser wird durch eine Höherkondensation, d.h. ein Kettenwachstum des Harnstoffharzes bewirkt. Die starke Viskositätserhöhung rührt her von einer Vernetzung des Harzes, d.h. vom eigentlichen Aushärten.

Es ist bevorzugt, den Druck in der Schäumapparatur und damit auch die Massetemperatur während des Schäumvorgangs konstant zu halten. Der Schäumprozess dauert im allgemeinen 20 Sekunden bis 20 Minuten, vorzugsweise 30 Sekunden bis 10 Minuten, je nach der Art und Intensität der Beheizung. Er ist dann abgeschlossen, wenn das Schaumharz voll ausgeschäumt und soweit ausgehärtet ist, dass es seine Form behält.

Bei einer bevorzugten Ausführungsform der Erfindung wird der fertige Schaumstoff noch einer Temperaturbehandlung unterworfen. Er wird dabei 1 Minute bis 180 Minuten, vorzugsweise 5 bis 60 Minuten lang auf Temperaturen zwischen 100 und 200°C, vorzugsweise auf 105 bis 150°C, erhitzt, wobei Wasser, Treibmittel und Formaldehyd weitgehend entfernt werden und eine Nachhärtung des Schaumharzes erfolgt. Diese Temperaturbehandlung kann unmittelbar anschliessend an die Schaumherstellung in der selben Apparatur erfolgen; sie kann aber auch zu einem späteren Zeitpunkt unabhängig vom Schäumprozess durchgeführt werden. Getemperte Schaumstoffe zeigen eine wesentlich geringere Neigung zum Schwinden als ungetemperte Produkte. Auch die Formaldehyd-Emission ist stark verringert.

Bei einer weiteren bevorzugten Ausführungsform der Erfindung presst man den Schaumstoff vor oder nach dem eventuellen Tempern ein oder mehrere Male um 40 bis 75% seiner ursprünglichen Höhe zusammen und lässt ihn sich dann wieder ausdehnen. Durch diesen Walkprozess werden vermutlich Reste von harten Bereichen im Zellgerüst zerstört. Dies führt zu einer Erhöhung der Elastizität des Schaums und zu geringerem Schwinden bei der Wärmelagerung.

Das Herstellungsverfahren kann diskontinuierlich oder kontinuierlich durchgeführt werden. Bei der bevorzugten kontinuierlichen Arbeitsweise wird zweckmässigerweise die wässrige Lösung oder Dispersion auf ein kontinuierlich laufendes, vorzugsweise beheiztes Metallband aufgetragen, dort gleichmässig verteilt und in einem Heizkanal verschäumt und gehärtet. Um zu verhindern, dass sich an der Oberfläche des Schaums eine spröde Haut ausbildet, kann man den Schäumvorgang zweckmässigerweise zwischen zwei mit dem Metallband gleichlaufenden Kunststoff-Folien durchführen. Daran kann sich dann unmittelbar der Temperier- und/oder Walkvorgang anschliessen.

Die Schaumstoffe können als Platten oder Bahnen mit einer Dicke von 50 cm oder darüber hergestellt werden oder als Schaumfolien mit einer Dicke von wenigen mm. Bei diskontinuierlicher Herstellungsweise können auch Formteile erhalten werden. Die Schaumstoffe können ein- oder beidseitig mit Deckschichten versehen oder kaschiert werden, z.B. mit Papier, Pappe, Glasvlies, Holz, Gipsplatten, Metallblechen oder -folien, Kunststoff-Folien, die ggf. auch geschäumt sein können.

Das Hauptanwendungsgebiet der erfindungsgemäss hergestellten Schaumstoffe ist die Wärme- und Schalldämmung von Gebäuden und Gebäudeteilen, insbesondere von Zwischenwänden, aber auch von Dächern, Fassaden, Türen und Fussböden; weiterhin die Wärme- und Schalldämmung von Fahrzeugen und Flugzeugen, sowie die Tieftemperaturisolierung, z.B. von Kühläusern, Öltanks und Behältern von Flüssiggas. Weitere Anwendungsgebiete sind die Verwendung als isolierende Wandverkleidung, sowie als isolierendes und stossdämmendes Verpackungsmaterial.

Die in den Beispielen genannten Teile, Prozente und Verhältnisse beziehen sich auf das Gewicht.

Beispiel 1

In einem offenen Gefäss wurde ein sprühgetrocknetes Harnstoff/Formaldehyd-Vorkondensat (Molverhältnis 1:1,6) zu einer wässrigen Lösung mit 0,4% Ammonchlorid, 0,5% Diisobutylnaphthalin-sulfonsaurem Natrium und 0,4% der Natriumsalze eines Gemisches von Alkylsulfonaten mit 12 bis 18 C-Atomen im Alkylrest gegeben, wobei die Prozentzahlen auf das Harnstoffharz bezogen sind. Die Konzentration des Harzes, bezogen auf die Mischung aus Harz und Wasser, betrug 76,5%. Die Mischung wurde kräftig gerührt, dann wurden 14% Pentan zugegeben und so lange weitergerührt (insgesamt ca. 2 Minuten lang), bis eine homogene Dispersion entstand. Diese wurde auf ein teflonisiertes Glasgewebe als Trägermaterial aufgerakelt und in einem Trockenschrank, in dem eine Lufttemperatur von 100°C herrschte, aufgeschäumt und gehärtet. Dabei stellte sich als Massetemperatur im Schaum die Siedetemperatur des Pentans ein, die unter diesen Bedingungen bei 37°C liegt. Nach 7 bis 8 Minuten war die maximale Steighöhe des Schaums erreicht. Der Schaum wurde insgesamt 30 Minuten lang bei 100°C im Trockenschrank belassen.

Daten des Schaumstoffs:
Rohdichte [$g.l^{-1}$]: 32
Wärmeleitzahl [$W.m^{-1}.°K^{-1}$]: 0,036
Stauchhärte bei 60% Stauchung [$N.cm^{-2}$]: 3,9
Stauchhärte/Rohdichte: 0,12
Wiedererholung: 70 bis 80%
Elastizitätsmodul [$N.mm^{-2}$]: 3
E-Modul/Rohdichte: 0,09
Biegeweg beim Bruch [mm]: 8,2
1/d-Verhältnis: < 10:1
Stegdichte [$g.cm^{-3}$] < 1,2.

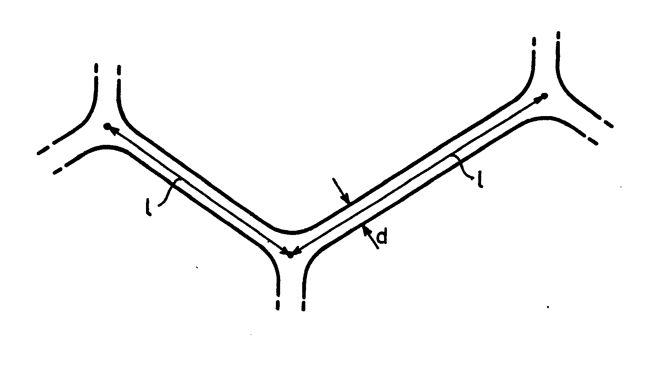

**Patentansprüche**

1. Elastische, offenzellige Schaumstoffe auf Basis eines Harnstoff/Formaldehyd-Kondensationsproduktes, welches mehr als 50 Gew.% Harnstoff und Formaldehyd-Einheiten einkondensiert enthält, und weniger als 50 Gew.% andere amino-, amid-, hydroxyl- oder carboxylgruppenhaltige Duroplastbildner einerseits und Aldehyde andererseits einkon-

densiert enthalten kann, gekennzeichnet durch folgende Eigenschaften:

a) die Rohdichte nach DIN 53 420 liegt zwischen 4 und 80 [g.1⁻¹];

b) die Wärmeleitzahl nach DIN 52 612 ist kleiner als 0,06 [W.m⁻¹.°K⁻¹];

c) die Stauchhärte nach DIN 53 577 bei 60% Stauchung, dividiert durch die Rohdichte liegt unter 0,30 [N.cm⁻²/g.1⁻¹], wobei bei der Bestimmung der Stauchhärte bei 60% Stauchung eine Wiedererholung des Schaumstoffs auf mindestens 70% seiner unsprünglichen Abmessung erfolgen muss;

d) der Elastizitätsmodul in Anlehnung an DIN 53 423, dividiert durch die Rohdichte liegt unter 0,25 [N.mm⁻²/g.1⁻¹];

e) der Biegeweg beim Bruch nach DIN 53 423 ist grösser als 6 [mm].

Elastischer, offenzelliger Schaumstoff nach Anspruch 1, dadurch gekennzeichnet, dass er bis zu 50 Gew.% Zusatzstoffe, wie faser- oder pulverförmige anorganische Verstärkungsmittel oder Füllstoffe, Pigmente, Farbstoffe, Flammschutzmittel, Weichmacher, Hydrophobierungsmittel oder Mittel zur Herabsetzung der Brandgastoxizität oder zur Förderung der Verkohlung enthält.

3. Verfahren zur Herstellung von elastischen, offenzelligen Schaumstoffen nach Anspruch 1 durch Verschäumen einer wässrigen Lösung oder Dispersion, welche ein Harnstoff/Formaldehyd-Vorkondensat, einen Emulgator, ein flüchtiges Treibmittel mit einem Siedepunkt zwischen 15 und 75°C und einen Härter, sowie ggf. übliche Zusatzstoffe enthält, und anschliessendes Aushärten des Schaums, dadurch gekennzeichnet, dass

a) die Konzentration des Vorkondensats in der Mischung aus Vorkondensat und Gesamtwasser (ohne Zusatzstoffe) zwischen 60 und 80 Gew.% liegt,

b) die Viskosität der Mischung aus Vorkondensat und Gesamtwasser zwischen 50 und 1000 dPas liegt,

c) das Verschäumen der wässrigen Lösung oder Dispersion mit einem pH-Wert von mehr als 3 durch Erhitzen auf eine Temperatur oberhalb des Siedepunktes des Treibmittels so duchgeführt wird, dass zunächst nur ein geringer Viskositätsanstieg erfolgt und der Härtungsvorgang unter starker Viscositätserhöhung erst dann einsetzt, wenn der Schäumvorgang im wesentlichen beendet ist, und

d) der Schaum dann ausgehärtet wird.

4. Verfahren zur Herstellung von elastischen Schaumstoffen nach Anspruch 1, dadurch gekennzeichnet, dass als Emulgator 0,5 bis 3 Gew.% einer oberflächenaktiven Verbindungen verwendet wird.

5. Verfahren zur Herstellung von elastischen Schaumstoffen nach Anspruch 3, dadurch gekennzeichnet, dass als Treibmittel 1 bis 50 Gew.% eines Kohlenwasserstoffs oder Halogenkohlenwasserstoffs mit einem Siedepunkt zwischen 30 und 75°C eingesetzt werden.

6. Verfahren zur Herstellung von elastischen Schaumstoffen nach Anspruch 3, dadurch gekennzeichnet, dass der pH-Wert der wässrigen Lösung oder Suspension zwischen 3,2 und 5,5 liegt.

7. Verfahren nach Anspruch 3, dadurch gekennzeichnet, dass der Schaumstoff 1 bis 180 Minuten lang auf Temperaturen zwischen 100 und 200°C erhitzt wird, wobei Wasser, Treibmittel und Formaldehyd weitgehend entfernt werden, und eine weitere Aushärtung erfolgt.

8. Verfahren nach Anspruch 3, dadurch gekennzeichnet, dass man den Schaumstoff, ggf. vor oder nach der Temperaturbehandlung nach Anspruch 7, ein oder mehrere Male um 40 bis 75% seiner ursprünglichen Höhe zusammenpresst und dann wieder ausdehnen lässt.

9. Verfahren nach Anspruch 3, dadurch gekennzeichnet, dass man den Schaumstoff mit 1 oder 2 Deckschichten versieht.

**Claims**

1. A resilient, open-cell foam based on a urea/formaldehyde condensate which contains, as condensed units, more than 50% by weight of urea and formaldehyde and can contain, as condensed units, less than 50% by weight of other amino-containing, amide-containing, hydroxyl-containing or carboxyl-containing duroplast formers on the one hand and aldehydes on the other hand, which has the following properties:

a) the gross density in accordance with DIN 53,420 is from 4 to 80 [g.1⁻¹],

b) the heat conductivity coefficient in accordance with DIN 52,612 is less than 0.06 [W.m⁻¹.°K⁻¹],

c) the compression load deflection in accordance with DIN 53,577 at 60% compression, divided by the gross density, is less than 0.30 [N.cm⁻²/g.1⁻¹], and, in determining the compression load deflection at 60% compression, the foam must return to not less than 70% of its original dimension,

d) the modulus of elasticity in accordance with DIN 53,423, divided by the gross density, is less than 0.25 [N.mm⁻²/g.1⁻¹], and

e) the deflection at rupture in accordance with DIN 53,423 is greater than 6 [mm].

2. A resilient, open-cell foam as claimed in claim 1, which contains not more than 50% by weight of additives, such as fibrous or pulverulent inorganic reinforcing agents or fillers, pigments, dyes, flameproofing agents, plasticizers, water-repellents or agents which reduce the toxicity of the combustion gas or promote coking.

3. A process for the preparation of a resilient, open-cell foam as claimed in claim 1 by foaming an aqueous solution or dispersion of a urea/formaldehyde precondensate which contains an emulsifier, a volatile blowing agent having a boiling point of from 15 to 75°C and a hardener, with or without conventional additives, and then hardening the foam, wherein

a) the concentration of the precondensate in the mixture of precondensate and total water (without additives) is from 60 to 80% by weight,

b) the viscosity of the mixture of the precondensate and total water is from 50 to 1,000 dPa.s,

c) foaming of the acqueous solution or dispersion having a pH higher than 3 is carried out by heating to above the boiling point of the blowing agent so that at first the viscosity increases only slightly, and the hardening process begins, accompanied by a sharp increase in viscosity, only when foaming is substantially complete, and

d) the foam is then hardened.

4. A process for the preparation of a resilient foam as claimed in claim 1, wherein from 0.5 to 3% by weight of a surfactant is used as the emulsifier.

5. A process for the preparation of a resilient foam as claimed in claim 3, wherein from 1 to 50% by weight of a hydrocarbon or halohydrocarbon having a boiling point of from 30 to 75°C is used as the blowing agent.

6. A process for the preparation of a resilient foam as claimed in claim 3, wherein the pH of the aqueous solution or suspension is from 3 to 6.

7. A process as claimed in claim 3, wherein the foam is heated at from 100 to 200°C for from 1 to 180 minutes, water, blowing agent and formaldehyde being substantially removed and further hardening taking place.

8. A process as claimed in claim 3, wherein the foam, either before or after the heat treatment as claimed in claim 7, is compressed once or several times by 40 - 75% of its original height and then permitted to expand again.

9. A process as claimed in claim 3, wherein the foam is provided with 1 or 2 covering layers.

**Revendications**

Matière alvéolaire élastique à cellules ouvertes, à base d'un produit de condensation urée-formaldéhyde, qui contient, condensés, plus de 50% en poids d'urée et de motifs formaldéhyde, et qui peut contenir, condensés, d'une part, moins de 50% en poids d'autres générateurs de matières thermodurcissables contenant des groupes amino, amide, hydroxyle ou carboxyle, et, d'autre part, des aldéhydes, caractérisée par les propriétés suivantes:

a) la densité apparente, selon DIN 53 420 est comprise entre 4 et 80 [g.1$^{-1}$];

b) le coefficient de conductibilité thermique selon DIN 52 612 est inférieur à 0,06 [W.m$^{-1}$.°K$^{-1}$];

c) la dureté en compression selon DIN 53 577, sous une compression de 60%, divisée par la densité apparente est inférieure à 0,30 [N.cm$^{-2}$/g.1$^{-1}$], la matière alvéolaire devant, lors de la détermination de la dureté en compression sous un écrasement de 60%, reprendre, à au moins 70%, ses dimensions initiales;

d) le module d'élasticité selon DIN 53 423 divisé par la densité apparente est inférieur à 0,25 [N.mm$^{-2}$/g.1$^{-1}$];

e) l'amplitude du pliage lord de la rupture selon DIN 53 423 est supérieure à 6 [mm].

2. Matière alvéolaire élastique à cellules ouvertes selon la revendication 1, caractérisée par le fait qu'elle contient jusqu'à 50% en poids d'additifs, tels que des agents de renforcement inorganiques, pulvérulents ou fibreux, ou des charges, pigments, colorants, agents d'imprégnation, plastifiants, agents rendant hydrophobes ou des moyens d'abaissement de la toxicité aux gaz de combustion ou provoquant la carbonisation.

3. Procédé de préparation de matière alvéolaire élastique, à cellules ouvertes, selon la revendication 1, par expansion d'une solution ou dispersion aqueuse d'un précondensat urée-formaldéhyde, qui contient un émulsifiant, un gonflant volatil, d'un point d'ébullition compris entre 15 et 75°C, et un durcisseur, ainsi qu'éventuellement des additifs usuels, caractérisé par le fait que

a) la concentration du précondensat dans le mélange de précondensat et d'eau totale (sans additifs) est comprise entre 60 et 80% en poids,

b) la viscosité du mélange de précondensat et d'eau totale est comprise entre 50 et 1000 dPas,

c) l'expansion de la solution ou dispersion aqueuse, d'un pH supérieur à 3, est effectuée, par chauffage à une température supérieure au point d'ébullition du gonflant, de telle sorte que, d'abord, ne se produise qu'un faible accroissement de viscosité, et que le processus de durcissement, avec fort accroisement de viscosité, ne se déclenche que lorsque le processus d'expansion est terminé pour l'essentiel, et

d) la masse alvéolaire est ensuite durcie.

4. Procédé de préparation de matières alvéolaires élastiques selon la revendication 1, caractérisé par le fait que, comme émulsifiant, on utilise 0,5 à 3% en poids d'un composé tensio-acif.

5. Procédé de préparation de matières alvéolaires élastiques selon la revendication 3, caractérisé par le fait que, comme gonflant, on introduit 1 à 50% en poids d'un hydrocarbure ou hydrocarbure halogéné, d'un point d'ébulation compris entre 30 et 75°C.

6. Procédé de préparation de matières alvéolaires élastiques selon la revendication 3, caractérisé par le fait que le pH de la solution ou suspension aqueuse est compris entre 3 et 6.

7. Procédé selon la revendication 3, caractérisé par le fait que la matière alvéolaire est chauffée, pendant 1 à 180 minutes, à des températures comprises entre 100 et 200°C, l'eau, le gonflant et le formaldéhyde étant éliminés, pour l'essentiel, et un nouveau durcissement se produisant.

8. Procédé selon la revendication 3, caractérisé par le fait que, éventuellement avant ou après le traitement thermique selon la revendication 7, on comprime la matière alvéolaire una ou plusieurs fois, à 40 à 75% de sa hauteur initiale.

9. Procédé selon la revendication 3, caractérisé par le fait que l'on munit la matière alvéolaire de 1 à 2 couches de recouvrement.